# EUROPÄISCHE PATENTSCHRIFT

(11) **EP 1 877 678 B1**
(45) Veröffentlichungstag und Bekanntmachung des Hinweises auf die Patenterteilung: **19.11.2008**
(21) Anmeldenummer: 06722767.8
(22) Anmeldetag: 10.04.2006
(51) Int. Cl.: F16D 63/00

(54) **BREMS- UND KLEMMVORRICHTUNG MIT ZUGFEDERELEMENT**
BRAKING AND CLAMPING DEVICE WITH A TENSION SPRING
DISPOSITIF DE FREINAGE ET DE BLOCAGE COMPORTANT UN ELEMENT A RESSORT DE TRACTION

(30) Priorität: 11.04.2005 DE 102005016724
(43) Veröffentlichungstag der Anmeldung: 16.01.2008
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2006/000623
(87) Internationale Veröffentlichungsnummer: WO 2006/108386

(56) Entgegenhaltungen:
- WO-A-01/34990
- DE-C1- 10 207 605
- "INA PUTS ON BRAKES WHEN POWER FAILS" AUTOMOTIVE ENGINEER, PROFESSIONAL ENGINEERING PUBLISHING, LONDON, GB, Bd. 25, Nr. 2, Februar 2000 (2000-02), Seite 29, XP000883835 ISSN: 0307-6490

## Beschreibung

Die Erfindung betrifft eine Brems- und/oder Klemmvorrichtung zur Anbringung an einem parallel zu einer Schiene geführten Schlitten, wobei sich mindestens zwei die Schiene zum Bremsen oder Klemmen kontaktierende Bremsbacken an einem Grundkörper gelenkig gelagert gegenüber liegen.

Aus der DE 102 07 605 C1 ist eine derartige Brems- und/oder Klemmvorrichtung bekannt. In einem Grundkörper sind separate Bremsbacken quer zur Schienenlängsrichtung beweglich gelagert. Die Bremsbacken werden über im Grundkörper neben den Bremsbacken gelegene Antriebe direkt verfahren.

Aus der WO-A-01 34990 geht eine Brems- und/oder Klemmvorrichtung hervor, wobei die Bremse mittels elastischer Verformung des Grundkörpers lösbar ist.

Der vorliegenden Erfindung liegt die Problemstellung zugrunde, eine Brems- und/oder Klemmvorrichtung zu entwickeln, die bei großen Klemmkräften einen einfachen und bauraumsparenden Aufbau hat und zudem dauerhaft wartungsfrei ist.

Diese Problemstellung wird mit den Merkmalen des Hauptanspruches gelöst. Dazu ist zwischen den Bremsbacken mindestens ein Zugfederelement in Federanlenkstellen angeordnet. Zwischen den Bremsbacken ist mindestens ein die Bremsbacken entgegen der Wirkrichtung des Zugfederelements belastender Antrieb in Abstützstellen gelagert. Pro Bremsbacke liegt die Anlenkstelle des Zugfederelements näher an der jeweiligen Schwenkgelenkstelle zwischen Grundkörper und Bremsbacken als die entsprechende Abstützstelle des Antriebs. Pro Bremsbacke liegt der geometrische Flächenschwerpunkt des oder der Bremsbeläge weiter von der Schwenkgelenkstelle weg als die entsprechende Abstützstelle des Antriebs.

Auf diese Weise presst das Zugfederelement mittels Zugkraft die Bremsbacken gegen die Schiene, an der der diese Vorrichtung tragende Schlitten abgebremst bzw. festgeklemmt werden soll. Die Schiene ist hierbei parallel zum Schlittenführungssystem ausgerichtet. Zum Lösen der Bremsbacken wird ein Antrieb mit einem ggf. nachgeschalteten Kraftübersetzungsgetriebe benutzt, der die Bremsbacken auseinander drückt. Dazu kann der Antrieb und das ggf. nachgeschaltete Getriebe z.B. direkt an den zu bewegenden Bremsbacken gelagert sein.

Als Kraftübertragungsgetriebe zwischen dem Antrieb, z.B. einem flach bauenden hydraulischen Zylinder-Kolben-Antrieb und den jeweiligen Bremsbacken wird ein bauraumsparendes Spreizgetriebe eingesetzt, um die erforderliche Lösekraft aufzubringen.

Selbstverständlich kann die Brems- und/oder Klemmvorrichtung auch vollständig in einen Führungsschuh oder in den Schlitten integriert werden.

Die Vorrichtung ist nicht auf lineare Führungen beschränkt. Sie kann auch auf Kreisbahnen oder anderen z.B. in einer Ebene liegenden gekrümmten Bahnen verwendet werden.

Weitere Einzelheiten der Erfindung ergeben sich aus den Unteransprüchen und der nachfolgenden Beschreibung schematisch dargestellter Ausführungsformen.
- Figur 1:: Querschnitt einer Brems- und/oder Klemmvorrichtung in Höhe eines gebogenen Spreizelementes;
- Figur 2:: Querschnitt einer Brems- und/oder Klemmvorrichtung in Höhe einer Zugfederschraube;
- Figur 3:: Teillängsschnitt durch einen Teil der Vorrichtung in der Höhe eines Bremsbackens;
- Figur 4:: Teildraufsicht zu Figur 3;
- Figur 5:: Teilquerschnitt zu Figur 1 mit gebogenem Spreizelement;
- Figur 6:: Teilquerschnitt zu Figur 1 mit geradem Spreizelement, geöffnete Klemmung;
- Figur 7:: Explosionsdarstellung zur Vorrichtung mit geraden Spreizelementen;
- Figur 8:: dimetrisch dargestellte Zugfederschraube;
- Figur 9:: Prinzipskizze.

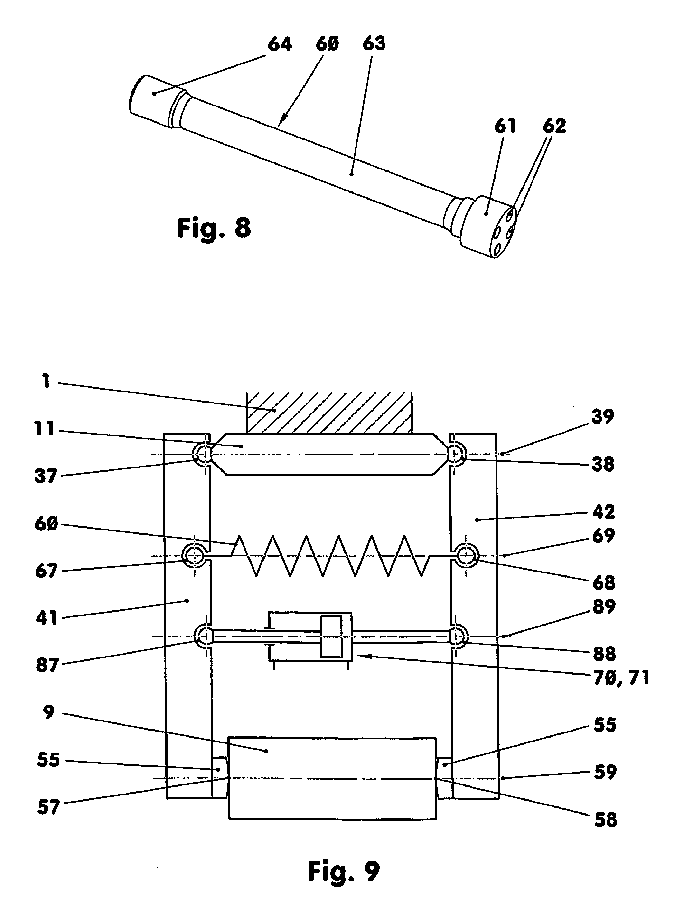

In der Figur 9 ist vereinfacht das Prinzip der im Folgenden beschriebenen Brems- und/oder Klemmvorrichtung gezeigt. An einem die Vorrichtung tragenden Schlitten (1) ist ein Grundkörper (11) befestigt, der über Schwenkgelenke zwei Bremsbacken (41, 42) trägt. Die in entsprechenden Schwenkgelenkstellen (37, 38) gelagerten Bremsbacken (41, 42) liegen beim Bremsen- und/oder Klemmen an einer ortsfesten Schiene (9) an. Zwischen dem Grundkörper(11) und der Schiene (9) sind räumlich ein Zugfederelement (60) und ein Antrieb (70) angeordnet. Das in Federgelenkstellen (67, 68) gelagerte Zugfederelement (60) erzeugt bei unbetätigtem Antrieb (70) die Klemmkraft. Zwischen dem Zugfederelement (60) und der Schiene (9) ist der Antrieb (70) positioniert. Letzterer, hier z.B. eine Zylinder-Kolben-Einheit, stützt sich über Abstützstellen (87, 88) an den Bremsbacken (41, 42) ab. Ggf. ist die Zylinder-Kolben-Einheit auch am Grundkörper (11) gelagert. Zum Lösen der Brems- und/oder Klemmvorrichtung wird der Antrieb (70) betätigt.

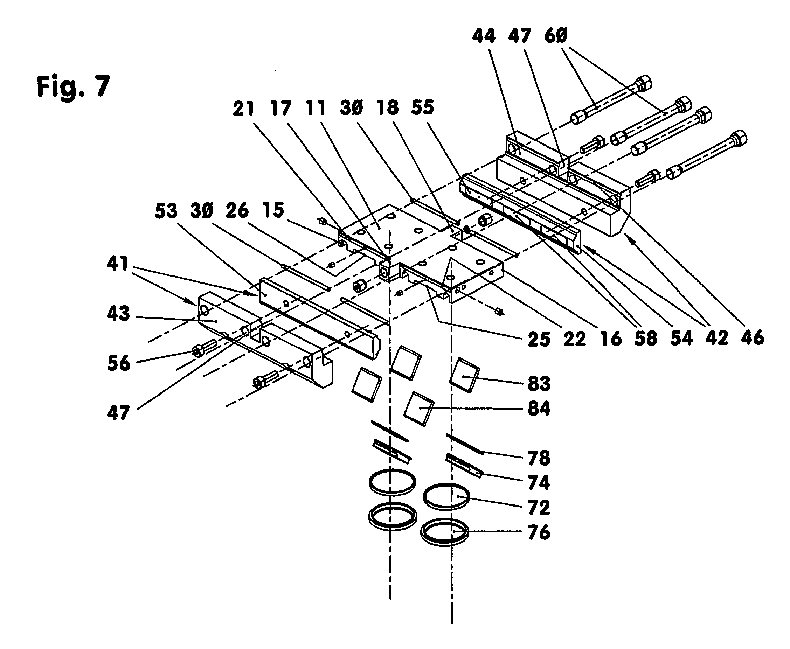

Eine Ausführungsvariante dieses Prinzips ist in Figur 7 als Explosionszeichnung dargestellt. Diese Variante besteht u.a. aus einem Grundkörper (11) zwei Bremsbacken (41, 42), vier Gelenkstäben (30), vier Zugfederschrauben (60), den Spreizelementen (83, 84), zwei Membranen (72), zwei Kolben (74) und diversen Kleinteilen.

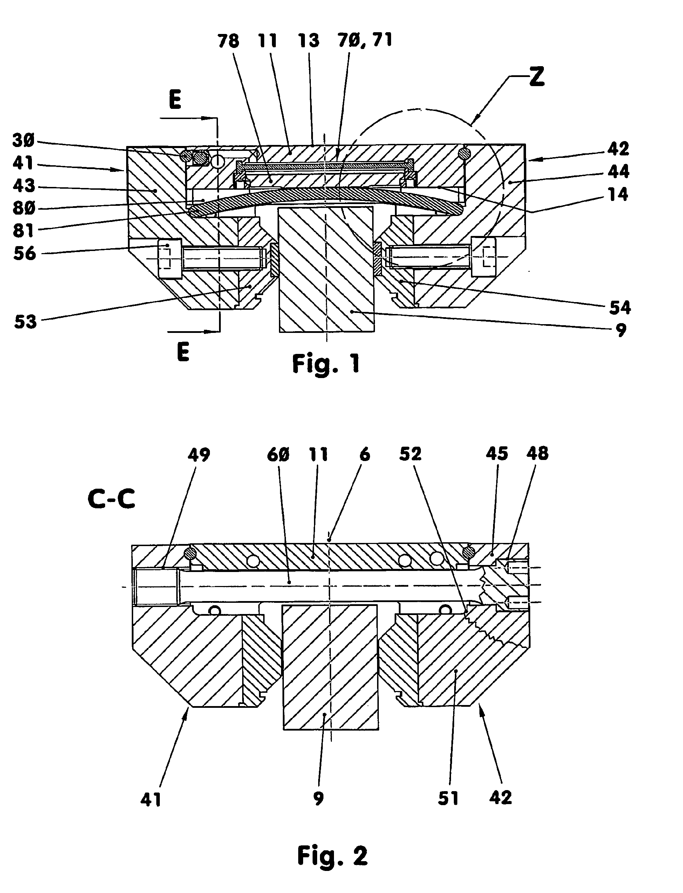

Der Grundkörper (11), eine Art Gehäuse, das am die Vorrichtung tragenden Schlitten (1) befestigt ist, vgl. Figur 9, ist im Wesentlichen eine ebene Platte, die an ihren Längsseiten (15, 16) jeweils einen Kragarm (17, 18) aufweist. Beidseits der Kragarme (17, 18) - in Längsrichtung (5) gesehen - sind in den Längsseiten (15, 16) Sicken (21, 22) eingearbeitet, vgl. auch Figuren 1, 2, 5 und 6. Die Sicken (21, 22) haben als Querschnitt einen Kreisabschnitt, der z.B. kleiner ist als eine Halbkreisfläche. Bei einer montierten Vorrichtung stehen bei jedem Betriebszustand die Kragarme (17, 18) über die Bremsbackenkontur über.

Von der Unterseite (14) her sind im Grundkörper (11) zwei Stufenbohrungen (23, 24) sacklochartig eingearbeitet, wobei die Bohrungstiefe ca. 3/4 der Grundkörperhöhe beträgt. Jede dieser Stufenbohrungen (23, 24) ist Teil eines Stellgliedes (71).

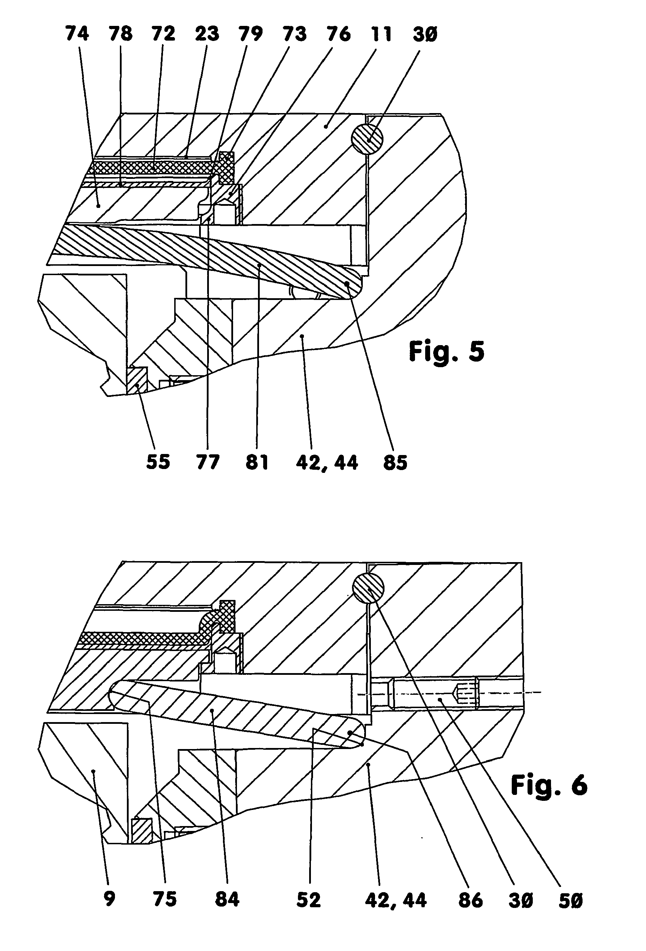

Vor dem Bohrungsgrund liegt eine z.B. kreisrunde Membrane (72), vgl. Figuren 5 und 6. Sie ist beispielsweise aus einem Elastomer hergestellt. Die Membrane (72) wird in der Stufenbohrung (23) mittels eines Führungsringes (76) öldicht gehalten. Dazu ist der Führungsring (76) über ein Außengewinde mit dem Innengewinde der Stufenbohrung (23) verschraubt. Zwischen dem Bohrungsgrund und der diesem gegenüberliegenden Stirnfläche des Führungsrings (76) ist die Membrane (72) eingespannt. Die Membrane (72) hat dazu einen umlaufenden Rand (73), der in Normalenrichtung zur Membranfläche auf beiden Membranflächenseiten übersteht. Im Bohrungsgrund und in der Stirnseite des Führungsrings (76) sind entsprechende Eindrehungen vorhanden um die Membrane (72) auch formschlüssig zu fixieren.

Im Führungsring (76) liegt ein flacher Kolben (74), der dort - gemäß dem Ausführungsbeispiel - einen freien Hub von 1 ... 2 Millimetern hat. Der Hub des Kolbens (74) ist nach unten hin durch einen nach innen ragenden Rand (77) des Führungsringes (76) begrenzt. Auf der Kolbenoberseite ist eine zur Membrane (72) hin orientierter Dichtungsteller (78) aufgelegt. Letzterer hat einen nach oben gewölbten elastischen Kragen (79) mit dem der Dichtungsteller (78) an der Innenwandung des Führungsringes (76) elastisch anliegt. Der Kragen (79) verhindert ein Verklemmen der Membrane (72) in der Bewegungsfuge des Kolbens (74).

Quer zur Längsrichtung (5) wird jede Stufenbohrung (23, 24) durch eine breite, kanalartige Nut (25, 26) mit z.B. rechteckigem Querschnitt geschnitten. Der jeweilige Nutgrund verläuft zumindest annähernd parallel zur Oberseite (13) des Grundkörpers (11). Die Nuttiefe beträgt ca. 1/3 der Grundkörperhöhe. Diese Nut bildet einen Raum, in dem die Spreizelemente (81-84) untergebracht sind.

Der Grundkörper (11) weist an ihrer Unterseite (14) vier schmale, parallele Nuten (27, 28) auf, die quer zur Längsrichtung (5) und parallel zur Grundkörperoberseite (13) orientiert sind. Je zwei dieser Nuten (27, 28) tangieren in geringem Abstand die Stufenbohrungen (23, 24). Die Querschnitte der Nuten (27, 28) setzen sich aus einem Rechteck und einem Halbkreis zusammen. Die einzelne Nut (27, 28) hat somit einen halbkreisförmigen Nutgrund. In diesen Nuten (27, 28) sind die Zugfederschrauben (60) angeordnet. Hierbei kontaktieren die Zugfederschrauben (60) die sie umgebenden Nutenwandungen in keinem Betriebszustand der Brems- und/oder Klemmvorrichtung.

Die Bremsbacken (41, 42) haben jeweils ca. die Länge des Grundkörpers (11), vgl. Figur 7. Sie bestehen jeweils aus einem Bremsklotzträger (43, 44) und einem Bremsklotz (53, 54) und haben einen winkelförmigen Querschnitt, vgl. Figuren 1 und 2. Der Bremsklotzträger (43, 44) teilt sich in einen Stützschenkel (45) und die Backenschenkel (51) auf. Der Stützschenkel (45) hat eine durchgehende Sicke (46), die der jeweiligen entsprechenden am Grundkörper (11) angeordneten Sicke (21, 22) gegenüber liegt. Beide Sicken (46; 21, 22) haben beispielsweise den gleichen Querschnitt. Zwischen den Sicken (46; 21, 22) ist - zur Ausbildung einer Schwenkgelenkstelle (37, 38) - jeweils ein Gelenkstab (30) eingesetzt. Der Stützschenkel (45) ist z.B. mittig durch eine Rechtecknut (47) unterbrochen. Über die Seitenflanken dieser Rechtecknut (47) werden die Bremskräfte von den Bremsbacken (41, 42) auf die Kragarme (17, 18) übertragen.

Im Ausführungsbeispiel liegen alle Schwenkgelenkstellen (37, 38) bzw. alle Mittellinien der montierten Gelenkstäbe (30) in einer Ebene (39).

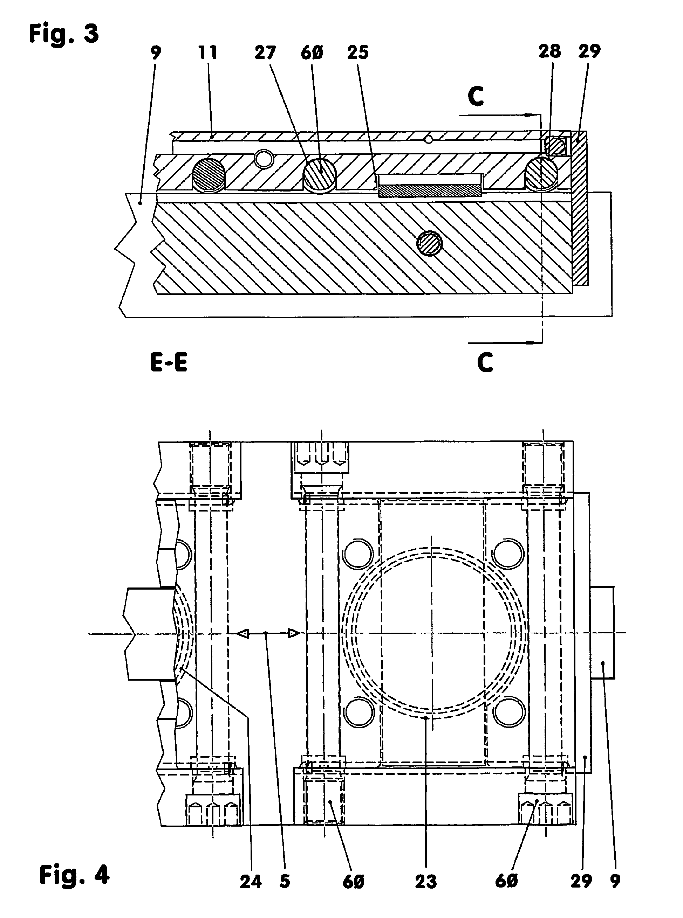

Des Weiteren befinden sich im Stützschenkel (45) vier Bohrungen (48, 49). Zwei dieser Bohrungen sind Senkbohrungen (48), vgl. Figur 2, die beiden anderen, in der Regel benachbarte Bohrungen sind Gewindebohrungen (49), vgl. auch Figur 4. Innerhalb der zusammengebauten Vorrichtung liegen sich jeweils eine Senkbohrung (48) und eine Gewindebohrung (49) zur Aufnahme einer Zugfederschraube (60) gegenüber.

Die Zugfederschraube (60), vgl. Figur 8, ist eine Dehnschraube, deren Federrate größer ist als 100 kN/mm. Sie hat zwischen einem Schraubenkopf (61) und einem Gewindeabschnitt (64) einen taillierten Schaft (63), dessen Durchmesser kleiner ist als der Kerndurchmesser des Gewindes im Gewindeabschnitt. Der zylindrische Schraubenkopf (61) hat mehrere Stirnbohrungen (62), über die die Zugfederschraube (60) mittels eines speziellen Zapfenschlüssels verschraubt bzw. die Klemmkraft eingestellt werden kann. Zugfederschrauben (60) mit annähernd gleichen geometrischen Abmessungen in den Bereichen Gewindeabschnitt (64) und Schraubenkopf (61) haben bei unterschiedlicher Federraten auch unterschiedliche Lochbilder, d.h. die Anzahl der Stirnbohrungen (62) und deren Anordnung bzw. Teilung wird dementsprechend variiert.

Der Gewindeabschnitt (64) und die Stirnauflage des Schraubenkopfes (61) bilden die Federanlenkstellen (67, 68) in den Bremsbacken (41, 42). Ggf. ist die Stirnauflage des Schraubenkopfes (61) und die entsprechende Gegenauflage im jeweiligen Bremsbacken (41, 42) sphärisch gekrümmt ausgebildet. Auch können die Gewindeabschnitte (64) über gelenkig gelagerte Gewindehülsen in den Bremsbacken (41, 42) angeordnet sein. Nach Figur 7 liegen die Federanlenkstellen (67, 68) aller Zugfederelemente (60) in einer Ebene (69).

Nach Figur 6 befindet sich im unteren Bereich des Stützschenkels (45) ein Gewindestift (50), dessen Mittellinie normal zur Längsrichtung (5) und parallel zur Oberseite (13) des Grundkörpers (11) verläuft. Zum Abstimmen der Dehnung der Zugfederschrauben (60) kann der Gewindestift (50) an der jeweiligen Seitenfläche (15, 16) der Grundplatte (11) provisorisch abgestützt werden.

Der sich an den Stützschenkel (45) anschließende Backenschenkel (51) trägt die Bremsklötze (53, 54), deren Form an die jeweilige Gegenform der Schiene (9) angepasst ist. Die Bremsklötze (53, 54) haben z.B. jeweils zwei Gewindebohrungen, über die sie mittels Schrauben (56) an den jeweiligen Bremsbacken (41, 42) befestigt sind, vgl. Figur 7. Jeder Bremsklotz (53, 54) trägt drei Bremsbeläge (55). Letztere sind in entsprechende Vertiefungen eingeklebt. Die Flächenschwerpunkte (57, 58) der Bremsflächen der Bremsbeläge (55) liegen hier beispielsweise auf einer Geraden. Die Geraden beider Bremsklötze (53, 54) bilden eine Ebene (59) vgl. Figur 9.

An der Übergangsstelle zwischen dem Stützschenkel (45) und dem Backenschenkel (51) befindet sich an der Bremsbackeninnenseite eine Hohlkehle (52). In ihr stützt sich das jeweils verwendete Spreizelement (81-84) ab. Die Hohlkehlen (52) der Bremsbacken (41, 42) bilden die Abstützstellen (87, 88) für den Antrieb (70). Nach Figur 9 liegen alle Abstützstellen (87, 88) in einer Ebene (89).

Die Spreizelemente (81) sind nach den Figuren 1 und 5 sichelförmig gebogene Stäbe mit einem z.B. rechteckigen Querschnittsprofil, vgl. Figur 3. An den stirnseitigen Enden, über die das jeweilige Spreizelement (81) in der entsprechenden Hohlkehle (52) des Bremsbackens (41, 42) abgestützt ist, sind die Spreizelemente (81) abgerundet. Der Radius der Abrundung entspricht beispielsweise der halben Profildicke des Spreizelements (81). Auf diese Weise ist die Flächenpressung in der jeweiligen Hohlkehle (52) - trotz der hohen Spreizkräfte - relativ klein.

Die Bogenform der Spreizelemente (81) hat einen mittleren Krümmungsradius von beispielsweise 123 Millimetern im unbelasteten Zustand bei einem Spreizabstand von z.B. 69 Millimetern. Diese Spreizelemente (81) sind aus einem metallischen Federwerkstoff hergestellt. In der Regel sind die Spreizelemente (81) vergütet.

Die Figuren 6 und 7 zeigen pro Antrieb ein Spreizgetriebe (80) mit zwei Spreizelementen (83, 84). Die Spreizelemente (83, 84) sind hier beispielsweise ebene Platten. Die Länge der Platte entspricht ca. ihrer Breite, z.B. 25 bis 26 Millimeter, während die Plattendicke z.B. 3 Millimeter beträgt. Die plattenförmigen Spreizelemente (83, 84) sind zwischen dem Kolben (74) und der jeweiligen Hohlkehle (52) des entsprechenden Bremsbackens (41, 42) eingelegt. Auch der Kolben (74) weist pro Spreizelement (83, 84) eine Hohlkehle (75) auf. Bei geschossenen Bremsbacken (41, 42) sind die Platten im Ausführungsbeispiel gegenüber der Grundplattenoberfläche um ca. 12...13 Winkelgrade geneigt. Im geöffneten Zustand reduziert sich die Neigung auf ca. 8...9 Winkelgrade. Keines der Spreizelemente (81; 83, 84) erreicht beim Lösen der Bremse eine quasistabile Strecklage.

In einer weiteren, nicht dargestellten Variante können die Spreizelemente auch direkt am Kolben (74) im Bereich der Hohlkehle (75) angeformt sein.

Bei unbelastetem Antrieb (70) sind die Bremsbacken (41, 42) geschlossen, vgl. Figur 9 und 2. Die vorgespannte Dehnschraube (60) erzeugt die Schließ- bzw. Klemmkraft. Wird nun die Hydraulikflüssigkeit, die sich im Raum zwischen dem Bohrungsgrund der Stufenbohrung (23) und der Membrane (72) befindet mit einem Druck von ca. 150 * 10⁵ Pa belastet, schmiegt sich die elastische Membrane (72) am Kolben (74) an und schiebt ihn abwärts, vgl. Figur 6. Hierbei spreizen die Spreizelemente (83, 84) die über die Gelenkstäbe (30) gelagerten Bremsbacken (42). Nach Figur 6 schwenkt u.a. das Spreizelement (84) im Gegenuhrzeigersinn in der Hohlkehle (52). Der Bremsbacken (42) schwenkt um die Mittellinie des Gelenkstabes (30). Der Bremsbelag (55) hebt von der Schiene (9) ab.

Im Gegensatz hierzu wird bei der Variante nach Figur 5 das gebogene Spreizelement (81) durch den Kolben (74) in eine gestrecktere Lage gezwungen.

Bei beiden Varianten werden die Dehnschrauben (60) jeweils um 0,3 bis 0,4 Millimeter gedehnt. Um das Bremsen wieder einzuleiten, wird im Zylinder (23, 76) der Hydraulikdruck entlastet. Die Spannkraft der Dehnschrauben (60) drückt über die Spreizelemente (81-84) die Kolben (74) zurück. Die Bremsbacken (41, 42) legen sich über die Bremsbeläge (55) wieder an der Schiene (9) an.

Innerhalb der Vorrichtung haben die Gelenkstellen zueinander eine bestimmte Anordnung. Letztere wird hier auf einen Basisabstand bezogen, der zwischen der Ebene (39) der Schwenkgelenkstellen (37, 38) und der Parallelebene (59) der Flächenschwerpunkte (57, 58) liegt. Zwischen diesen Ebenen (39, 59) liegen die ebenfalls parallelen Ebenen (69, 89) der Federanlenkstellen (67, 68) und der Abstützstellen (87, 88). Die Federgelenkstellenebene (69) hat einen Abstand gegenüber der Schwenkgelenkstellenebene (39) von z.B. 39...43% des Basisabstandes. Der Abstand zwischen der Schwenkgelenkstellenebene (39) und der Abstützstellenebene (89) liegt bei 50...56% des Basisabstandes.

Selbstverständlich können sich die Ebenen (39, 59, 69, 89) auch untereinander schneiden, sofern die Schnittlinien außerhalb der Vorrichtung oder der Gelenk-, Anlenk- oder Abstützstellenbereiche liegen. Als Bereich wird hier der Abstand bezeichnet, den die jeweilige Stelle des einen Bremsbackens (41, 42) gegenüber der entsprechenden Stelle des anderen Bremsbackens (42, 41) hat.

### Bezugszeichenliste:

- 1: Schlitten
- 5: Längsrichtung, Schlittenbewegung
- 6: vertikale Mittenlängsebene
- 9: Schiene, Führungsschiene

- 11: Grundkörper
- 13: Oberseite
- 14: Unterseite
- 15, 16: Längsseiten
- 17, 18: Kragarme
- 21, 22: Sicken
- 23, 24: Stufenbohrung, Zylinder
- 25, 26: Nut, breit
- 27, 28: Nut, schmal
- 29: Stirnplatte
- 30: Gelenkstäbe

- 37, 38: Schwenkgelenkstellen
- 39: Ebene, Schwenkgelenkstellenebene

- 41, 42: Bremsbacken
- 43, 44: Bremsklotzträger
- 45: Stützschenkel
- 46: Sicken
- 47: Rechtecknut
- 48: Senkbohrungen
- 49: Gewindebohrungen
- 50: Gewindestift
- 51: Backenschenkel
- 52: Hohlkehle
- 53, 54: Bremsklotz
- 55: Bremsbeläge
- 56: Schrauben
- 57, 58: Flächenschwerpunkte
- 59: Ebene

- 60: Zugfederelement, Zugfederschraube
- 61: Schraubenkopf
- 62: Stirnbohrungen
- 63: Schaft
- 64: Gewindeabschnitt
- 67, 68: Federanlenkstellen
- 69: Ebene, Federgelenkstellenebene

- 70: Antrieb
- 71: Stellglied
- 72: Membran
- 73: Rand, umlaufend
- 74: Kolben
- 75: Hohlkehle
- 76: Führungsring, Zylinder
- 77: Rand, nach innen ragend
- 78: Dichtungsteller
- 79: Kragen

- 80: Getriebe
- 81: Spreizelement, gebogen
- 83, 84: Spreizelemente, eben
- 85, 86: Schwenkachsen
- 87, 88: Abstützstellen
- 89: Ebene, Abstützstellenebene

## Patentansprüche

1. Brems- und/oder Klemmvorrichtung zur Anbringung an einem parallel zu einer Schiene (9) geführten Schlitten (1),
- wobei sich mindestens zwei die Schiene (9) zum Bremsen oder Klemmen kontaktierende Bremsbacken (41, 42) an einem Grundkörper (11) gelenkig gelagert gegenüber liegen, **dadurch gekennzeichnet daß**
- zwischen den Bremsbacken (41, 42) mindestens ein Zugfederelement (60) in Federanlenkstellen (67, 68) angeordnet ist,
- zwischen den Bremsbacken (41, 42) mindestens ein die Bremsbacken (41, 42) entgegen der Wirkrichtung des Zugfederelements (60) belastender Antrieb (70) in Abstützstellen (87, 88) gelagert ist,
- pro Bremsbacke (41, 42) die Anlenkstelle (67, 68) des einzelnen Zugfederelements (60) näher an der jeweiligen Schwenkgelenkstelle (37, 38) zwischen Grundkörper (11) und Bremsbacke (41, 42) liegt als die entsprechende Abstützstelle (87, 88) des Antriebs (70) und
- pro Bremsbacke (41, 42) der geometrische Flächenschwerpunkt (57, 58) des oder der Bremsbeläge (55) weiter von der Schwenkgelenkstelle (37, 38) weg liegt als die entsprechende Abstützstelle (87, 88) des Antriebs (70).

2. Vorrichtung gemäß Anspruch 1, **dadurch gekennzeichnet, dass** das Zugfederelement (60) eine Dehnschraube ist.

3. Vorrichtung gemäß Anspruch 1, **dadurch gekennzeichnet, dass** der Antrieb (70) am Grundkörper (11) gelagert ist.

4. Vorrichtung gemäß Anspruch 1, **dadurch gekennzeichnet, dass** der Antrieb (70) aus einem Stellglied (71) und einem Kraftübersetzungsgetriebe (80) besteht.

5. Vorrichtung gemäß Anspruch 1, **dadurch gekennzeichnet, dass** das Kraftübertragungsgetriebe (80) ein Spreizgetriebe ist.

6. Vorrichtung gemäß Anspruch 5, **dadurch gekennzeichnet, dass** das Spreizgetriebe eines oder mehrere Spreizelemente (81, 83, 84) aufweist, deren Schwenkachsen (85, 86) in den bremsbackenseitigen Abstützstellen (87, 88) zumindest annähernd parallel zur Führungslängsrichtung (5) angeordnet sind.

7. Vorrichtung gemäß Anspruch 1, **dadurch gekennzeichnet, dass** die Schwenkgelenkstellen (37, 38) zumindest annähernd in einer Ebene (39) liegen.

8. Vorrichtung gemäß Anspruch 1, **dadurch gekennzeichnet, dass** die Zugfederanlenkstellen (67, 68) zumindest annähernd in einer Ebene (69) liegen.

9. Vorrichtung gemäß Anspruch 1, **dadurch gekennzeichnet, dass** die Abstützgelenkstellen (87, 88) bei mehr als zwei Antrieben (70) zumindest annähernd in einer Ebene (89) liegen.

10. Vorrichtung gemäß Anspruch 1, **dadurch gekennzeichnet, dass** die Flächenschwerpunkte (57, 58) der bremsenden Flächen der Bremsbeläge (55) beider Bremsbacken (41, 42) zumindest annähernd in einer Ebene (59) liegen.

11. Vorrichtung gemäß der Ansprüche 7 bis 10, **dadurch gekennzeichnet, dass** die Ebenen (39, 59, 69, 89) parallel zueinander angeordnet sind.

## Claims

1. Braking and/or clamping apparatus adapted to be mounted on a carriage (1) guided to move in parallel with a rail (9),
- including at least two brake shoes (41, 42) engaging rail (9) for braking or clamping and articulated to a body (11) in mutually facing positions,
**characterized by**
- at least one tension spring element (60) disposed between brake shoes (41, 42) at spring articulation points (67, 68),
- at least one drive element (70) disposed between brake shoes (41, 42) and supported at points (87, 88) to load said brake shoes (41, 42) in directions against the action of tension spring element (60),
- the articulation point (67, 68) of the tension spring element (60) associated with each brake shoe (41, 42) being located to be nearer to the respective pivoting point (37, 38) between body (11) and brake shoe (41, 42) than the corresponding support point (87, 88) of drive element (70), and
- the geometric centre (57, 58) of the area of brake pad (55) associated with each brake shoe (41, 42) being located further away from pivoting point (37, 38) than the corresponding support point (87, 88) of drive element (70).

2. Apparatus as in claim 1, **characterized in that** tension spring element (60) comprises a waisted-shank tension screw.

3. Apparatus as in claim 1, **characterized in that** drive (70) is supported on body (11).

4. Apparatus as in claim 1, **characterized in that** drive (70) consists of actuator means (71) and force transmission means (80).

5. Apparatus as in claim 1, **characterized by** force transmission means (80) comprising a spreader-type transmission assembly.

6. Apparatus as in claim 5, **characterized in that** said spreader-type transmission assembly comprises one or a plurality of spreader elements (81, 83, 84) of which the pivoting axes (85, 86) extend at least approximately in parallel with the longitudinal guiding direction (5) in brake-shoe-side support points (87, 88).

7. Apparatus as in claim 1, **characterized in that** pivoting points (37, 38) are located at least approximately in a common plane (39).

8. Apparatus as in claim 1, **characterized in that** articulation points (67, 68) of said tension springs are located at least approximately in a common plane (69).

9. Apparatus as in claim 1, **characterized in that**, if more than two drives (70) are present, the supporting articulation points (87, 88) are located at least approximately in a common plane (89).

10. Apparatus as in claim 1, **characterized in that** the centres (57, 58) of the braking surfaces of pads (55) of both brake shoes (41, 42) are located at least approximately in a common plane (59).

11. Apparatus as in claims 7 to 10, **characterized in that** planes (39, 59, 69, 89) extend in parallel with each other.

## Revendications

1. Dispositif de freinage et/ou de serrage, destiné à être monté sur un chariot (1), parallèlement à une coulisse (9),
- ayant au moins deux mâchoires de frein (41, 42) articulées opposées, montées sur un corps de base (11), qui entrent en contact avec la coulisse (9) pour freiner ou serrer, ayant la particularité
- qu'au moins un ressort de traction (60) est disposé entre les mâchoires de frein (41, 42) dans des points d'articulation (67, 68),
- qu'au moins un mécanisme de commande (70), agissant sur les mâchoires de frein (41, 42) en sens inverse par rapport à l'action du ressort de traction (60), est logé dans des points d'appui (87, 88),
- que le point d'articulation (67, 68) du ressort de traction (60) de chaque mâchoire de frein (41, 42) se trouve plus près du point de pivotement (37, 38), entre le corps de base (11) et la mâchoire de frein (41, 42), que le point d'appui correspondant (87, 88) du mécanisme de commande (79) et
- que le point de gravité géométrique des surfaces (57, 58) de la ou des plaquette(s) de frein (55) de chaque mâchoire de frein (41, 42) est plus éloigné du point de pivotement (37, 38) que le point d'appui correspondant (87, 88) du mécanisme de commande (70).

2. Dispositif selon la revendication 1, le ressort de traction (60) étant une vis de traction.

3. Dispositif selon la revendication 1, le mécanisme de commande (70) étant positionné près du corps de base (11).

4. Dispositif selon la revendication 1, le mécanisme de commande (70) étant composé d'un élément de réglage (71) et d'un mécanisme de transmission (80).

5. Dispositif selon la revendication 1, le mécanisme de transmission (80) étant un mécanisme d'écartement.

6. Dispositif selon la revendication 5, le mécanisme d'écartement présentant un ou plusieurs éléments d'écartement (81, 83, 84) dont les axes de pivotement (87, 88) dans les points d'appui du côté des mâchoires de frein (87, 88) sont disposés au moins approximativement en parallèle au sens longitudinal de la coulisse (5).

7. Dispositif selon la revendication 1, les points de pivotement (37, 38) se trouvant au moins approximativement sur le même plan (39).

8. Dispositif selon la revendication 1, les points d'articulation (67, 68) des ressorts de traction se trouvant au moins approximativement sur le même plan (69).

9. Dispositif selon la revendication 1, les points d'appui (87, 88) d'au moins deux mécanismes de commande (70) se trouvant au moins approximativement sur le même plan (89).

10. Dispositif selon la revendication 1, les centres de gravité (57, 58) des surfaces de freinage des plaquettes de frein (55) des deux mâchoires de frein (41, 42) se trouvant au moins approximativement sur le même plan (59).

11. Dispositif selon les revendications 7 à 10, les plans (39, 59, 69, 89) étant disposés en parallèle.
